# EUROPEAN PATENT SPECIFICATION

(11) **EP 3 869 625 B1**
(45) Date of publication and mention of the grant of the patent: **26.07.2023**
(21) Application number: 21159019.5
(22) Date of filing: 24.02.2021
(51) Int. Cl.: H01R 13/516, H01R 13/629

(54) **ANGLED PLUG CONNECTION AND ELECTRICALLY HEATED WINDSHIELD WIPER WITH SUCH AN ANGLED PLUG CONNECTION**
ABGEWINKELTE STECKVERBINDUNG UND ELEKTRISCH BEHEIZTER SCHEIBENWISCHER MIT SOLCH EINER ABGEWINKELTEN STECKVERBINDUNG
CONNEXION À FICHE COUDÉE ET ESSUIE-GLACE CHAUFFÉ ÉLECTRIQUEMENT DOTÉ D'UNE TELLE CONNEXION À FICHE COUDÉE

(30) Priority: 24.02.2020 DE 102020202352
(43) Date of publication of application: 25.08.2021
(73) Proprietor: TE Connectivity Germany GmbH, 64625 Bensheim (DE)
(72) Inventor: PANITZ, Gregor, 64625 Bensheim (DE)
(74) Representative: Grünecker Patent- und Rechtsanwälte PartG mbB

(56) References cited:
- DE-T2- 60 124 733
- JP-A- H06 163 107
- US-A1- 2013 183 838
- US-B1- 9 455 523

## Description

The present invention relates to angled plug connections, in particular for use in automotive applications, for example, in electrically heated windshield wiper systems. The angled plug connection comprises a connector, a mating connector and a guide housing which is formed having a first receptacle for said connector and a second receptacle for said mating connector, wherein said first receptacle extends along a first plug-in direction and said second receptacle extends along a second plug-in direction that extends at an angle or perpendicularly to the first plug-in direction, wherein said second receptacle opens into said first receptacle and wherein the connector is adapted to be plugged in said first receptacle along the first plug-in direction and the mating connector is adapted to be plugged in the second receptacle along the second plug-in direction, wherein said connector is connected to said mating connector by way of a link guide.

In modern technology, releasable plug connections are required in a plurality of applications for data transmission or for the transmission of electrical currents and/or liquid media, for example, also in automotive engineering for windshield wiper systems. Cleaning liquids that are distributed by wiper blades are used as liquid media and then enhance the cleaning effect of the windshield wiper system. In order to ensure the operation of the windshield wiper system even with frost and icy wind, electric heating elements are installed in the wiper blades which prevent the cleaning fluid from freezing by supplying electrical energy. Furthermore, the heating elements can easily remove snow and ice from the windshield if necessary.

In the development of such plug connections, the requirements of the system providers to always provide more compact, lighter, and cheaper end products represent a challenge. Challenging requirements frequently arise with regard to the installation space, plugging direction, and accessibility of the individual components of the plug connection. In addition, there may be strict requirements that demand the plug connection to be handled easily and quickly.

US 9,455,523 B1 discloses a right-angle connector assembly according to the preamble of claim 1 including a first connector having a mating assist slider configured to slide along a first axis defined by the first connector. The assembly further comprises a second connector having a second housing and an intermediate housing attached to the second housing that is configured to slide along a second axis defined by the second connector. The second axis is substantially perpendicular to the first axis. The intermediate housing is configured to receive the first connector along the first axis. When the mating assist slider is moved along the first axis from a starting position to an ending position, the mating assist slider moves the intermediate housing along the second axis from an initial position to a final position. In the final position, a first terminal within the first connector is mated with a second terminal within the second connector at a right angle.

DE 601 24 733 T2 concerns an electric connector comprising a base connector fixed onto a mounting surface, and a socket connector extracted from the inserting space of the base connector along the extracting direction generally perpendicular to the mounting surface. When an electric conductor extending in the direction parallel with the mounting surface is pulled in the direction parallel with the mounting surface, a tension is converted into a force in the direction of extracting the socket connector by the activation of the cam surface of the base connector and the cam surface of the socket connector.

JP H06 163107 A discloses a first connector and a second connector which can be mated with one another. A pin of a freely slidable terminal frame moves along a long hole of the base of the first connector under guidance of a guide groove of the second connector. The contact positon of a contact terminal of the second connector and the plate terminal of the first connector are thus automatically regulated.

US 2013/0183838 A1 relates to a connector for retaining a wiper on a windscreen wiper arm. The connector includes an internal electrical connection device between, on the one hand, an electrical connector connected to the electrical circuit of the vehicle, and, on the other hand, at least one heating element deposited on a reinforcement implanted in said wiper. The internal connecting device includes at least one metal part extending perpendicularly to the heating element and exerting pressure against it, so as to ensure a permanent contact with said heating element.

The present invention is based on the problem of generally improving the flexibility and applicability of plug connections.

This problem is solved by an angled plug connection as defined in claim 1. In particular, the problem is solved by an angled plug connection as described in the outset, wherein a motion of said connector along the first plug-in direction is coupled by way of said link guide to a motion of said mating connector in the direction of the second plug-in direction. The first plug-in direction and the second plug-in direction can in particular be represented by two linearly independent two-dimensional vectors. The first plug-in direction and the second plug-in direction can extend in particular at an angle of 90° +/- 45° relative to one another.

The present invention thereby enables the implementation of two different plug-in directions which can be adapted to the respectively available space and direction requirements of the application. This contributes to enhanced applicability of the angled plug connection according to the invention. Furthermore, a plugging process between the connector and the mating connector can be supported by the link guide, so that the angled plug connection according to the invention can be handled better and more easily.

The invention can be further improved by the following embodiments which are advantageous in themselves and which can be arbitrarily combined with one another.

According to a first embodiment of the invention, the connector can comprise at least one link guide element and the mating connector can comprise at least one link guide element that is complementary to the link guide element of the connector. In particular, associated link guide elements can engage in one another, so that the connector can be connected in this manner to the mating connector directly by way of the link guide.

The connector can preferably comprise at least one sliding block and the mating connector can comprise at least one connecting link having a link track that is shaped to be complementary to the at least one sliding block of the connector. The direction of the link guide is defined by the direction of the link track.

In detail, the sliding block can be configured, e.g., as a rail-like, bolt-like or stud-like projection. The link track can again be realized by a slot-like recess which, in terms of its shape, forms a counterpart to the sliding block. The link track can be in particular a linear groove which runs at least at an acute angle relative to the first plug-in direction and/or to the second plug-in direction. In at least one cross-section perpendicular to the course of the link track, an inner contour of the link track preferably corresponds to an outer contour of the sliding block. For example, the inner contour of the link track and the outer contour of the sliding block can each have a square, rectangular, triangular, semicircular or oval shape or be configured as a combination of such basic geometric shapes. This results in a simple structure for the link guide, which enables reliable force transmission.

Of course, the at least one sliding block can also be arranged on the mating connector, as a result of which the at least one connecting link with a link track is to be arranged on the connector.

The angled plug connection furthermore comprises a guide housing which is formed having a first receptacle for the connector and a second receptacle for the mating connector, wherein the second receptacle opens into the first receptacle. The first receptacle extends along the first plug-in direction and the second receptacle extends along the second plug-in direction. The first receptacle can form in particular a first socket which in at least one cross section perpendicular to the first plug-in direction has an inner contour that corresponds to an outer contour of the connector in a cross section of the connector that is perpendicular to the first plug-in direction. Analogously, the second receptacle can form a second socket which in a cross section perpendicular to the second plug-in direction has an inner contour which in turn corresponds to an outer contour of the mating connector in a cross section of the mating connector that is perpendicular to the second plug-in direction. Consequently, the connector and the mating connector can be inserted into the respective receptacles and plugged together in the interior of the guide housing. The guide housing there has a stabilizing effect on the plugging process.

For additional stabilization, at least one linear guide element for linear guidance of a complementary linear guide element of the connector or of the mating connector, respectively, can optionally be formed in the first receptacle and/or in the second receptacle, respectively. The at least one linear guide element of the first receptacle or the second receptacle, respectively, can be configured by a rail-like, bolt-like or stud-like convexity on at least one inner surface of the first receptacle or the second receptacle, respectively. The convexity can protrude into the first receptacle or into the second receptacle, respectively. Furthermore, the rail-like convexity can extend linearly along the first plug-in direction or along the second plug-in direction, respectively. The associated complementary linear guide element of the connector or the mating connector, respectively, can be a channel-like concavity which is disposed on the connector or on the mating connector, respectively, and engages around the convexity at least in sections. It is presently understood that the convexity and the concavity can each also be swapped.

The connector or the mating connector, respectively, can be inserted into the relevant receptacle of the guide housing and made to assume a pre-assembly position already prior to the plugging process. Keeping the connector or the mating connector, respectively, in the relevant receptacle can help shorten the plugging process and thereby simplify the final assembly process, i.e., moving the connector and the mating connector to a final assembly position.

To further improve the assembly process, the connector and/or the mating connector, respectively, can each enter into at least one latching connection with the guide housing. More precisely, at least one latching element for latching with a complementary latching element of the guide housing can be disposed on the connector and/or on the mating connector. For example, the connector and/or the mating connector can comprise at least one resilient spring arm with a latching tab or a latching hook. In the first receptacle or in the second receptacle, respectively, a corresponding latching groove or latching opening can be provided in which the latching tab or the latching hook can engage.

The connector and/or the mating connector preferably latches with the guide housing in two different discrete positions. For example, in a pre-latched position in which the connector or the mating connector, respectively, is precisely in the pre-assembly position and in a final latched position in which the connector or the mating connector, respectively, is precisely in the final assembly position. For this purpose, two latching grooves or two latching openings can be provided for the connector in the first receptacle which are arranged successively to each other along the first plug-in directions. Two latching grooves or two latching openings, which are arranged successively to each other along the second plug-in direction, can accordingly be provided for the mating connector in the second receptacle.

The connection between the connector and the mating connector by way of the link guide is preferably established from reaching the pre-assembly position to reaching the final assembly position and also in all in-between positions of the connector and the mating connector. The link guide can thus have a supporting effect on the plugging process until the connector and the mating connector have reached the final assembly position.

Latching in the pre-latched position (i.e., in the pre-assembly position) and/or in the final latching position (i.e., in the final assembly position) can optionally be verified by an audible click sound and/or a visual inspection. For this purpose, the respective latching groove or latching opening can in particular connect an inner surface of the guide housing end-to-end to an outer surface of the guide housing so that the engagement of the latching tab or the latching hook is visible from the outside.

According to the invention, a motion of the connector along the first plug-in direction is coupled by way of the link guide with a motion of the mating connector in the direction of the second plug-in direction. Due to the engagement of the associated link guide elements of the connector and the mating connector during a motion of the connector along the first plug-in direction, a force can be transmitted via the link guide which contains at least one force component whose direction vector points along the second plug-in direction so that a motion of the mating connector results along the second plug-in direction. This ensures that the connector can be plugged to the mating connector, even if either the connector or the mating connector is not directly accessible. In addition, the unplugging process can also be carried out by the coupled motion when the connector or the mating connector is accessible only from one side.

In a further embodiment of the invention, at least one contact slot of the mating connector can be associated with at least one blade-shaped contact of the connector, wherein the at least one blade-shaped contact is received in the at least one contact slot in a movable manner relative to the at least one contact slot in a direction along the link guide while in contact with the at least one contact slot. The at least one contact slot can there be formed by a fork-shaped contact of the mating connector. Reliable electrical contact is thus achieved, preferably on both sides, with the simplest possible structure. Furthermore, this embodiment is characterized by low material and manufacturing costs, since conventional stamped and bent parts can be used for the respective contacts.

The motion of the connector and the mating connector coupled via the link guide can be used in particular to insert the at least one blade-shaped contact of the connector into the at least one contact slot of the mating connector in order to establish an electrical connection, wherein only either the connector or the mating connector needs to be moved actively to the final assembly position. The respective other one (i.e. mating connector or connector) is moved to the final assembly position by the mechanical action of the link guide.

The arrangement of the blade-shaped and fork-shaped contacts can also be interchanged depending on the application. The number of blade-shaped and fork-shaped contacts can be adapted to the number of terminals required for the application. In the case of a high number of terminals, a plugging aid, for example, in the form of a lever, can be provided in order to be able to provide the plugging forces that increase proportionally with the number of terminals.

In applications that require a seal tightness of the angled plug connection, appropriate seals can optionally be provided in the spaces between the connector and the first receptacle and between the mating connector and the second receptacle, respectively. This enables in particular the use of the angled plug connection according to the invention in an electrically heated windshield wiper.

The underlying problem mentioned above can also be solved by an electrical connector for an angled plug connection according to the previous embodiments, wherein at least one link guide element of the link guide is disposed on a connector housing of the electrical connector for forced guidance of a complementary link guide element of the mating connector of the angled plug connection.

The electrical connector according to the invention is advantageous because it can be attached to an electrical module or unit to be connected. For example, the electrical connector according to the invention can be attached to a wiper arm and/or a wiper blade, preferably an electrically heated windshield wiper system. Due to the advantages already mentioned, a process for replacing the wiper blade can be made simple.

The at least one link guide element of the electrical connector is preferably formed onto an outwardly facing surface, in particular an outer surface, or on an inwardly facing surface, in particular an inner surface of the connector housing, respectively. The connector housing can there be a contact support. The contact support can hold at least one electrically conductive contact element with a contact surface for establishing contact with a complementary mating contact.

The at least one contact element can in turn be crimped, soldered, welded or similarly attached to an electrical conductor of a cable at an end facing away from the contact surface. The cable can pass, for example, through the wiper arm and be connected to a power source. When routing the cables, it is to be ensured that the cable or conductor has enough play so that it is not damaged during the motion of the link guide.

Alternatively, the at least one contact element can be connected to an electric heating element at the end facing away from the contact surface, wherein the heating element is integrated into the wiper blade.

According to one embodiment, the connector housing configured as a contact support can hold at least one contact element which is configured as a blade-shaped contact, blade-like contact, blade contact or comb contact with at least one insertion chamfer, wherein the at least one insertion chamfer extends on an edge of the contact element that is parallel to the first plug-in direction. Preferably two insertion chamfers can jointly form an insertion blade. The at least one insertion chamfer or the insertion blade, respectively, simplifies the plugging process since resistance is reduced during the insertion into the mating contact. In addition, less material abrasion is caused which leads to an extension of the service life of the at least one contact element.

In an alternative embodiment, the connector housing configured as a contact support can hold at least one contact element which is configured as a fork-shaped contact or fork contact with at least two contact strips. The at least two contact strips can define a contact slot, wherein the contact slot runs parallel to the second plug-in direction. The contact strips are preferably arranged mirror-symmetrically with respect to the contact slot. Two tips of the contact strips disposed opposite to one another with respect to the contact slot are preferably pressed against one another in a resilient manner. The necessary contact force is then generated by the contact strips and contact resistance is reduced accordingly.

The at least one insertion chamfer or the insertion blade, respectively, of the at least one blade-shaped contact can penetrate in a wedge-like manner between the tips of the contact strips of the associated at least one fork-shaped contact and spread the contact strips apart. In the state of the contact strips being spread apart, the tips of the contact strips rest on the contact surfaces of the at least one blade-shaped contact and establish an electrical contact with the latter at at least one point of contact. In the course of the plugging process between the connector and the mating connector, the number of points of contact can increase.

The motion of the connector and the mating connector coupled by way of the link guide preferably creates a relative motion between the at least one blade-shaped contact and the associated at least one fork-shaped contact. In the context of the plugging process between the connector and the mating connector, a shift of the respective at least one point of contact on the contact surfaces of the blade-shaped contact consequently occurs. Due to the course of the link track, the respective at least one point of contact can shift at least in sections parallel to the course of the link track. In the case of a link track with a curved course, the shift of the respective at least one point of contact occurs along a correspondingly curved trajectory. Alternatively or in addition, the respective at least one point of contact can also be shifted in sections parallel to the first plug-in direction and/or the second plug-in direction.

Optionally, the tips of the contact strips can likewise comprise insertion chamfers.

The contact strips are preferably freely accessible or at least laterally accessible in the connector housing configured as a contact support. This means that the contact strips are in particular not surrounded on all sides by the connector housing. Preferably, lateral access is made possible for every fork-shaped contact through a gap-shaped opening in the connector housing.

In a further embodiment, the at least one contact element can extend freely accessible in sections or at least laterally accessible in a space surrounded by the connector housing at least in part, wherein the at least one link guide element is also located in said space. This allows for a compact and space-saving configuration of the electrical connector.

To further improve the functionality of the electrical connector, at least two link guide elements can be disposed on the connector housing. Preferably, one respective link guide element is provided on at least two oppositely disposed surfaces of the connector housing. Said surfaces are disposed in particular opposite one another with respect to the at least one contact element. A symmetrical arrangement of the at least two link guide elements can thus be achieved, which among other things also counteracts the at least one contact element to be become wedged against the respective mating contact. The load on the link guide elements involved being balanced on both sides also reduces the wear that occurs and consequently increases the service life of the electrical connector.

In a further embodiment, the connector housing can be surrounded in a circumferential direction perpendicular to the first or second plug-in direction by a sealing ring which serves to seal the gap between the connector housing and the guide housing.

For electrically heated windshield wiper systems, the problem mentioned at the outset can be solved by a windshield wiper, wherein the windshield wiper comprises a wiper arm and a wiper blade with at least one integrated heating element, and wherein the wiper blade is releasably connected to the wiper arm by way of at least one angular plug connection according to the above embodiments. The angled plug connection can there be used in particular to supply power to the heating element and to facilitate the process of replacing the wiper blade by way of the link guide, e.g. after a certain amount of material wear.

The invention shall be explained in more detail hereafter with reference to the drawings using several embodiments, the different features of which can be combined with one another arbitrarily in accordance with the above remarks.
- Fig. 1: shows a schematic perspective exploded representation of an angled plug connection of the invention according to a first embodiment;
- Fig. 2: shows a schematic planar representation of the angled plug connection of the invention according to the first embodiment with the mating connector in the preassembly position;
- Fig. 3: shows a schematic planar representation of the angled plug connection of the invention according to the first embodiment with the connector and the mating connector in the final assembly position;
- Fig. 4: shows a schematic sectional representation of the angled plug connection of the invention according to the first embodiment with the connector and the mating connector in the pre-assembly position;
- Fig. 5: shows a schematic sectional representation of the angled plug connection of the invention according to the first embodiment with the connector and the mating connector in the final assembly position;
- Fig. 6: shows a schematic perspective representation of an angled plug connection of the invention according to a second embodiment;
- Fig. 7: shows a schematic sectional representation of the angled plug connection of the invention according to the second embodiment with the connector and the mating connector in the pre-assembly position;
- Fig. 8: shows a schematic sectional representation of the angled plug connection of the invention according to the second embodiment with the connector and the mating connector in the final assembly position;
- Fig. 9: shows a schematic representation of the electrically heated windshield wiper of the invention according to a possible embodiment; and
- Fig. 10: shows an enlarged partial view of a sectional representation of the angled plug connection of the invention according to a third embodiment.

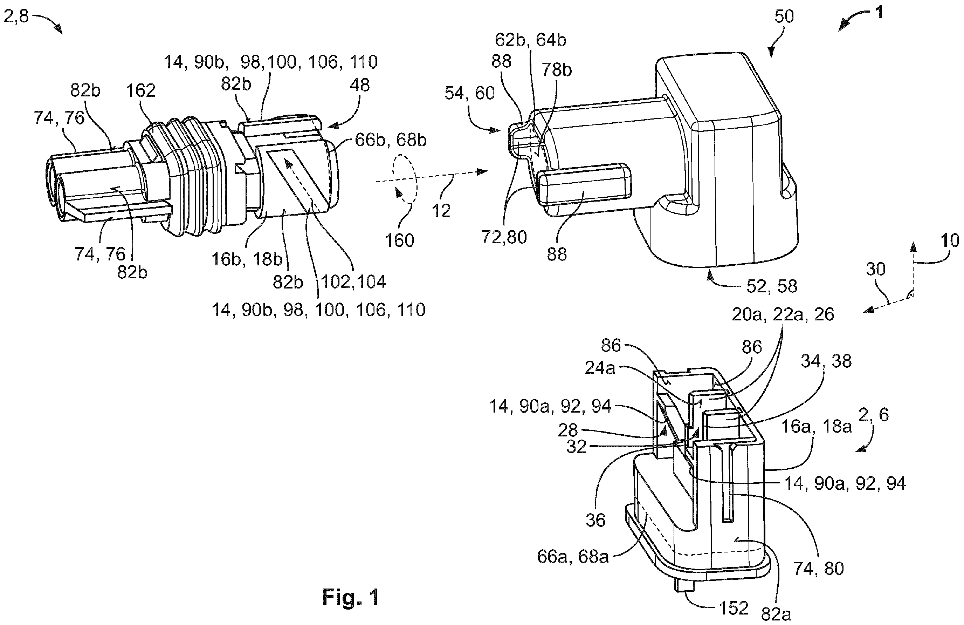

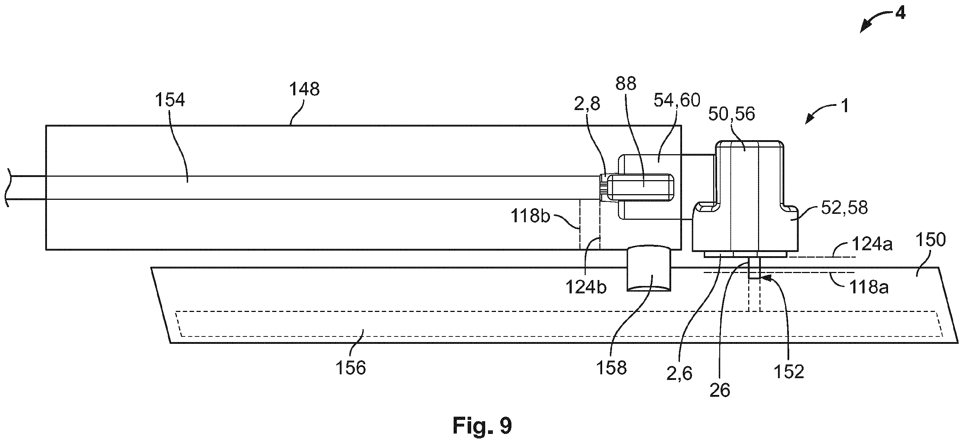

The schematic structure of an angled plug connection 1 according to the invention and an electrical connector 2 according to the invention shall first be illustrated with reference to Figures 1 to 8 and Figure 10. The schematic structure of an electrically heated windshield wiper 4 according to the invention shall then be described with reference to Figure 9.

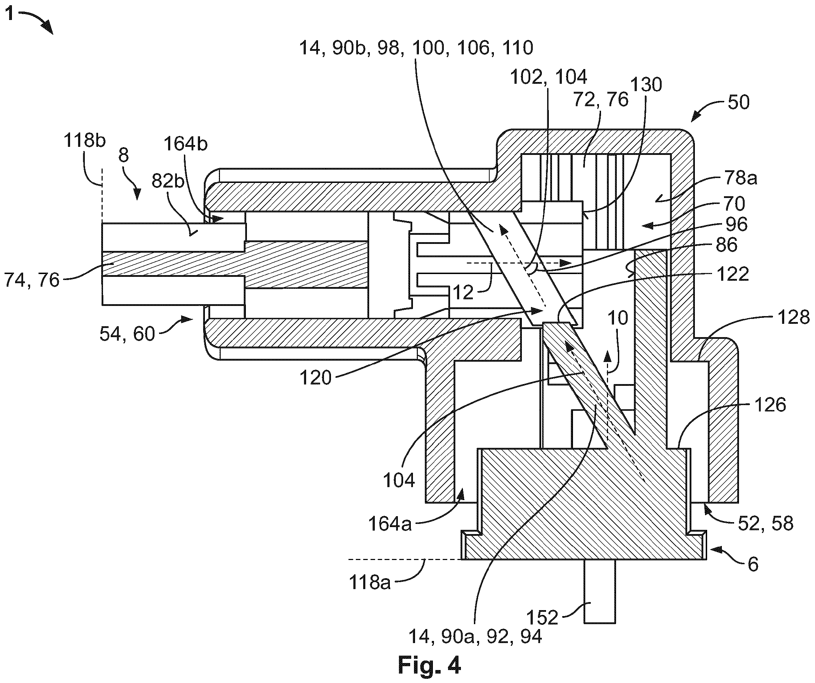

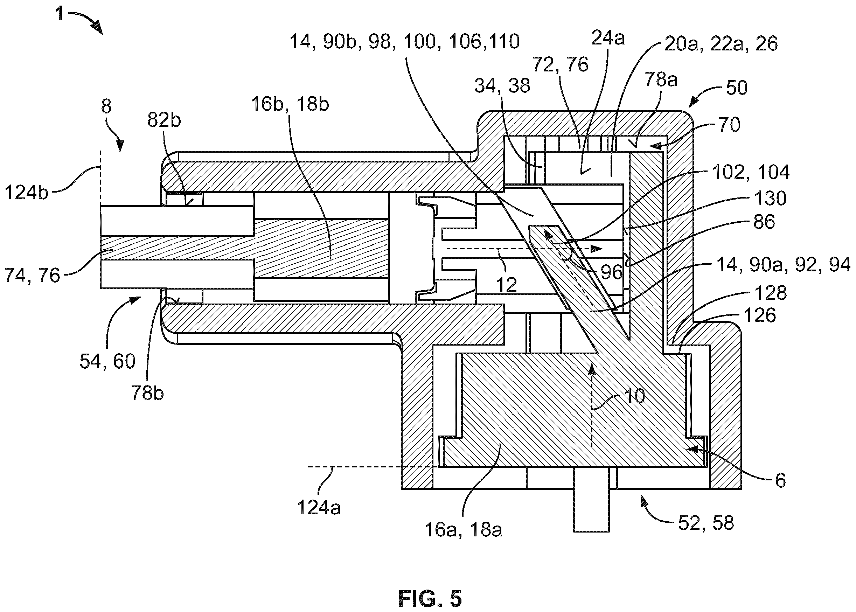

Angled plug connection 1 according to the invention can comprise a connector 6 and a mating connector 8, wherein connector 6 is adapted to be plugged into angled plug connection 1 along a first plug-in direction 10 and mating connector 8 is adapted to be plugged into angled plug connector 1 along a second plug-in direction 12 extending at an angle or perpendicular to first plug-in direction 10. Furthermore, connector 6 can be connected to mating connector 8 by way of a link guide 14, as shall be explained farther below with reference to Figures 4 and 5.

Electrical connector 2 according to the invention described in more detail below can be used in different embodiments as connector 6 and/or mating connector 8. To make the text easier to understand, only the distinction between connector 6 and mating connector 8 shall be described below, while the description also respectively relates to electrical connector 2 according to the invention.

As shown in Figure 1, connector 6 can comprise a connector housing 16a. Accordingly, mating connector 8 can comprise a connector housing 16b. Connector housings 16a, 16b can be, for example, injection molded parts made of plastic material. Furthermore, connector housings 16a, 16b can serve as contact supports 18a, 18b. Contact support 18a, 18b can each hold at least one electrically conductive contact element 20a, 20b for establishing contact with a complementary mating contact 22b, 22a. For this purpose, respective contact elements 20a, 20b can comprise a contact surface 24a, 24b and be cast or plugged into the corresponding contact support 18a, 18b. For the purpose of accessibility to respective contact surfaces 24a, 24b, corresponding contact element 20a, 20b can be cast into contact support 18a only in part and/or protrude into a recess in contact support 18b.

In the embodiment shown in Figure 1, connector housing 16a of connector 6 configured as a contact support 18a holds at least one blade-shaped contact 26, for example, two blade-shaped contacts 26. Blade-shaped contacts 26 extend parallel to one another along first plug-in direction 10 into a space 28 which is in part surrounded by connector housing 16a of connector 6. For this purpose, blade-shaped contacts 26 are in part cast into contact support 18a and remain accessible in sections laterally, in particular from a direction 30 perpendicular to first plug-in direction 10. Accessible sections 32 of blade-shaped contacts 26 are each formed having at least one insertion chamfer 34, wherein at least one insertion chamfer 34 extends on an edge 36 of respective blade-shaped contact 26 that is parallel to first plug-in direction 10. The at least one insertion chamfer 34 creates a deeper material thickness than in the remaining blade-shaped contact 26. This means, in the region of insertion chamfer 34, blade-shaped contact 26 has a smaller material thickness perpendicular to first plug-in direction 10. More precisely, two respective points on the outer surface of blade-shaped contact 26, which are disposed opposite each other with respect to first plug-in direction 10, exhibit a smaller distance in the region of insertion chamfer 34 than outside the region of insertion chamfer 34.

Two insertion chamfers 34 can preferably be formed on respective blade-shaped contacts 26 which together form an insertion blade 38.

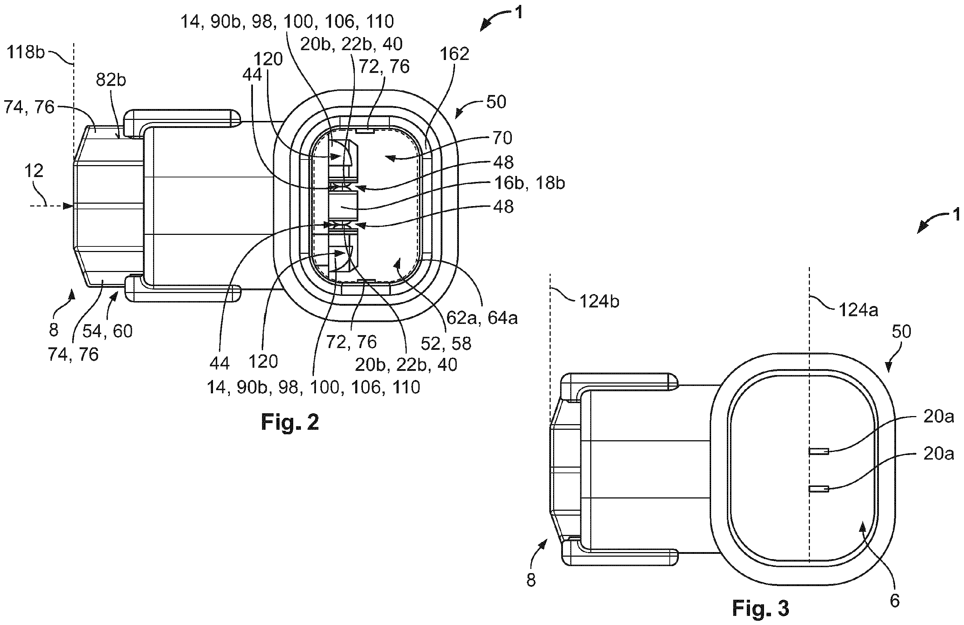

In the embodiment shown, connector housing 16b of mating connector 8 configured as contact support 18b holds at least one fork-shaped contact 40, for example, two fork-shaped contacts 40. Fork-shaped contacts 40 can each comprise at least two contact strips 42 which define a contact slot 44. Contact slot 44 extends parallel to second plug-in direction 12. In particular, contact strips 42 can be arranged in pairs mirror-symmetrically with respect to contact slot 44. Two tips 45 of contact strips 42 disposed opposite to one another with respect to contact slot 44 are preferably pressed against one another in a resilient manner. Furthermore, fork-shaped contacts 40 each protrude into gap-shaped openings 48 of contact support 18b so that the corresponding contact slot 44 is accessible on both sides perpendicular to second plug-in direction 12. This is illustrated in Figure 2.

Angled plug connection 1 can furthermore comprise a guide housing 50 which is formed having a first receptacle 52 for connector 6 and a second receptacle 54 for mating connector 8, wherein second receptacle 54 opens into first receptacle 52. The course of first receptacle 52 and of second receptacle 54 is shown by way of example in Figure 4. First receptacle 52 extends linearly along first plug-in direction 10. Second receptacle 54 accordingly extends linearly along second plug-in direction 12. Guide housing 50 can also be a plastic injection-molded part and be formed, for example, as a cage 56 in which connector 6 or mating connector 8 is captively arranged to be movable.

First receptacle 52 can form a first socket 58 which in at least one cross section 62a perpendicular to first plug-in direction 10 has an inner contour 64a that corresponds to an outer contour 66a of connector 6 in a cross section 68a of connector 6 that is perpendicular to first plug-in direction 10. Analogously, second receptacle 54 can form a second socket 60 which in a cross section 62b perpendicular to second plug-in direction 12 has an inner contour 64b which in turn corresponds to an outer contour 66b of mating connector 8 in a cross section 68b of mating connector 8 that is perpendicular to second plug-in direction 12. As shown in Figure 5, connector 6 and mating connector 8 can be inserted into respective receptacles 52, 54 configured as sockets 58, 60 and plugged together in an interior 70 of guide housing 50.

At least one respective linear guide element 72 for linear guidance of a complementary linear guide element 74 of connector 6 or of mating connector 8, respectively, can optionally be formed in first receptacle 52 and/or in second receptacle 54.

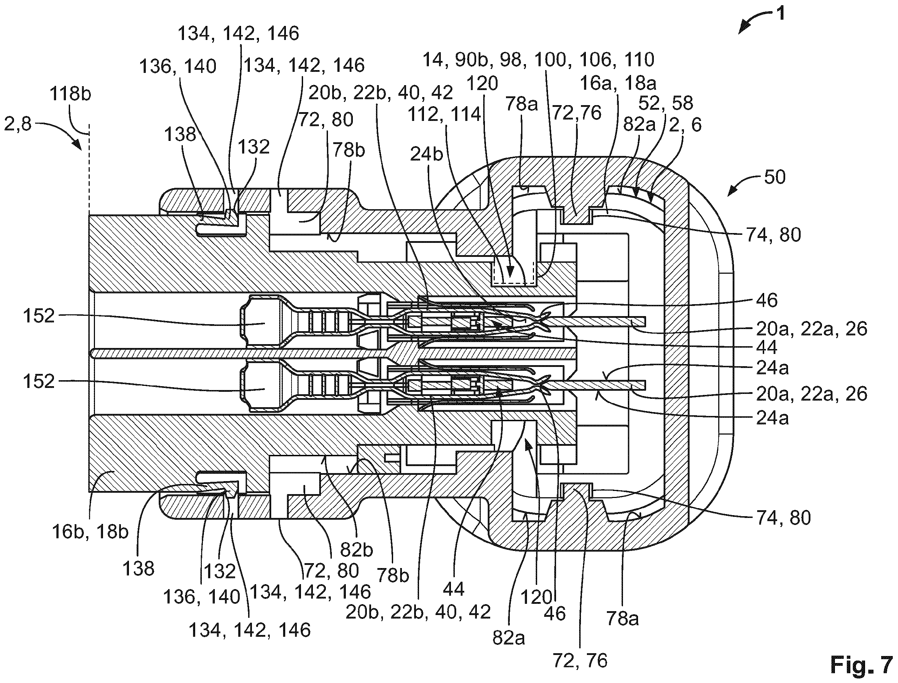

As shown in Figure 7 for connector 6, the at least one linear guide element 72 in first receptacle 52 can be implemented by a rail-like convexity 76 on at least one inner surface 78a, preferably on two oppositely disposed inner surfaces 78a of first receptacle 52. In particular, the at least one linear guide element 72 can protrude into first receptacle 52. The associated complementary linear guide element 74 of connector 6 can be a channel-like concavity 80, which is formed on at least one outer surface 82a, preferably on two oppositely disposed outer surfaces 82a of connector housing 16a of connector 6, and at least in part surrounds the corresponding rail-like convexity 76.

As shown in Figure 1 for mating connector 8, rail-like convexity 76 can also be formed on at least one outer surface 82b, preferably on two oppositely disposed outer surfaces 82b of connector housing 16b of mating connector 8. Accordingly, channel-like concavity 80 is formed on at least one inner surface 78b, preferably on two oppositely disposed inner surfaces 78b of second receptacle 54. In the embodiment shown in Figure 1, two channel-like concavities 80 are each sunk into a bulge 88 of guide housing 50.

For link guide 14 shown in Figures 4 and 5, connector 6 can comprise at least one link guide element 90a and mating connector 8 can comprise at least one link guide element 90b that is complementary to link guide element 90a of connector 6. In particular, respective associated link guide elements 90a, 90b can engage in one another, so that link guide 14 directly connects connector 6 to mating connector 8.

The at least one link guide element 90a of connector 6 can be configured, for example, as a sliding block 92. There are preferably two sliding blocks 92 disposed on connector 6. According to the embodiment shown in Figure 1, the two sliding blocks 92 can be rail-like projections 94 parallel to each other which extend linearly in space 28 on oppositely disposed inner surfaces 86 of connector housing 16a of connector 6 and extend at least at an acute angle 96 to first plug-in direction 10 and/or to second plug-in direction 12. Alternatively, the two sliding blocks 92 can be configured as bolt-like or stud-like projections.

The at least one link guide element 90b of mating connector 8 can again be a connecting link 98 with a link track 100, wherein link track 100 is shaped to be complementary to sliding block 92 and the course 102 of link track 100 determines the direction 104 of link guide 14. Preferably two connecting links 98 each with a link guide 100 are disposed on mating connector 8. As shown in Figure 1, link tracks 100 can be implemented by parallel slot-like recesses 106 on two oppositely disposed outer surfaces 82b of connector housing 16b of mating connector 8. In particular, link tracks 100 can be linear grooves 110 which also extend at an acute angle 96.

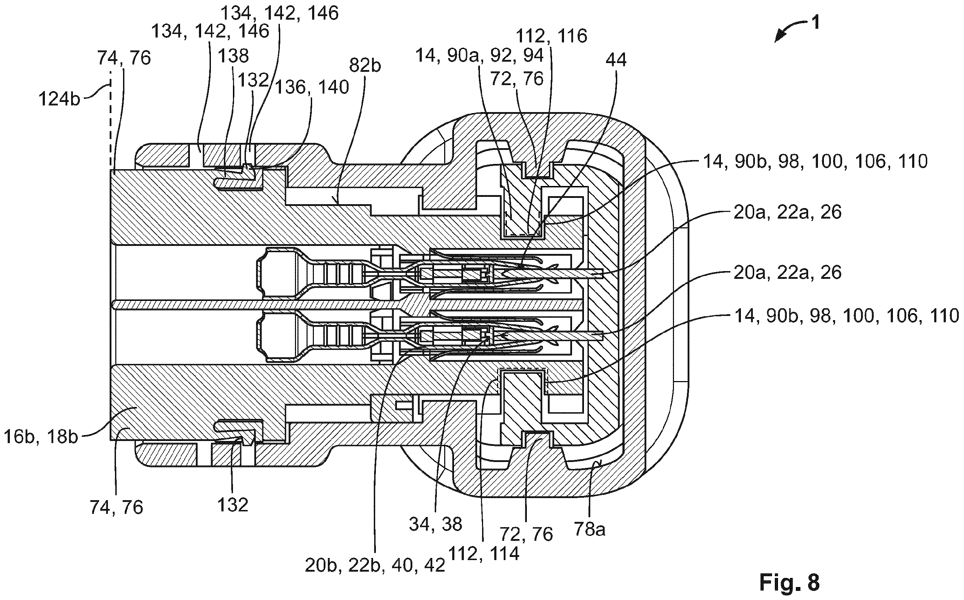

In at least one cross-section 112 perpendicular to course 102 of link track 100, an inner contour 114 of link track 100 corresponds to an outer contour 116 of associated sliding block 92. In the embodiment shown, link tracks 100 each have a rectangularly shaped inner contour 114. Accordingly, sliding blocks 92 each have a rectangularly shaped outer contour 116. This can be seen in Figure 8. Alternatively, the shape of inner contours 114 and outer contours 116 can be square, triangular, semicircular, oval or a combination of such basic geometric shapes.

As shown in Figure 2, for example, mating connector 8 can be inserted into second receptacle 54 and made to assume a pre-assembly position 118b. In the embodiment shown, pre-assembly position 118b of mating connector 8 is characterized in that mating connector 8 is inserted into second receptacle 54 until a respective end 120 of link tracks 100 protrudes at least in part into first receptacle 52. This state is also shown in Figures 4 and 7.

In Figure 4, connector 6 is inserted into first receptacle 52 and likewise made to assume a pre-assembly position 118a. In pre-assembly position 118a of connector 6, connector 6 is inserted into first receptacle 52 until a respective outer edge 122 of sliding blocks 92 protrudes into associated link track 100, so that sliding blocks 92 engage with associated link tracks 100. Due to the engagement of associated link guide elements 90a, 90b, a motion of connector 6 along first plug-in direction 10 is coupled by way of link guide 14 with a motion of mating connector 8 in the direction of second plug-in direction 12.

From pre-assembly position 118a of connector 6, connector 6 can be made to assume final assembly position 124a of connector 6 shown in Figure 5 in that connector 6 is inserted farther into first receptacle 52 along first plug-in direction 10. Final assembly position 124a of connector 6 shown can be characterized in that at least one shoulder 126 of connector housing 16a of connector 6 abuts against a step 128 of first receptacle 52. Alternatively, in final assembly position 124a of connector 6, entire link guide element 90a of the connector can be inserted in link guide element 90b of mating connector 8.

By way of link guide 14, the insertion motion of connector 6 creates a drawing motion of mating connector 8 which moves mating connector 8 farther into second receptacle 54 without then needing to influence mating connector 8 in any other way. The drawing motion can make mating connector 8 assume a final assembly position 124b of mating connector 8. In final assembly position 124b of mating connector 8, a face surface 130 of connector housing 16b of mating connector 8 can rest on an inner surface 86 of connector housing 16a of connector 6. Figure 3 shows final assembly positions 124a, 124b of connector 6 and mating connector 8.

In the context of an unplugging process, the steps just described take place in reverse order.

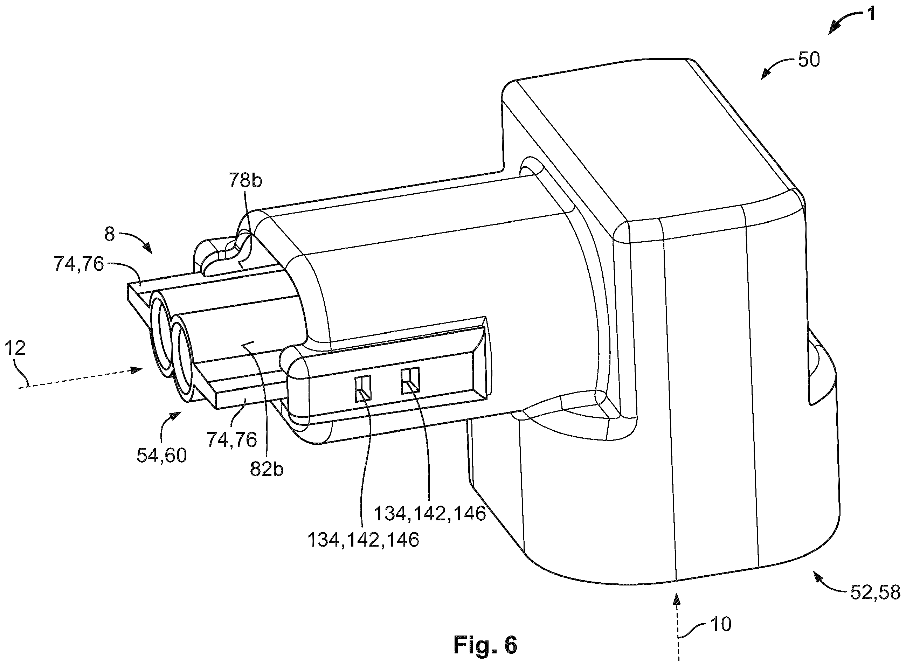

Figures 6 to 8 show a second possible embodiment of angled plug connection 1 in which pre-assembly position 118b and final assembly position 124b of mating connector 8 are defined by way of a latching connection 132. Latching connection 132 is established by at least one latching element 134 on mating connector 8 and at least one complementary latching element 136 in guide housing 50. In particular, connector housing 16b of mating connector 8 can comprise at least one resilient spring arm 138 with a latching hook 140. At least one corresponding latching groove 142 in which the at least one latching hook 140 can engage can be provided in guide housing 50.

In the embodiment shown in Figures 7 and 8, two resilient spring arms 138, each with a latching hook 140, are disposed on connector housing 16b of mating connector 8. Formed in guide housing 50 on two oppositely disposed inner surfaces 78b of second receptacle 54 are latching grooves 142 which are arranged consecutively along second plug-in direction 12. Latching hooks 140 can each engage in one latching groove 142 of guide housing 50 which represents either the pre-assembly position 118b of mating connector 8 or the final assembly position 124b of mating connector 8. As can additionally be seen from Figures 6 to 8, latching grooves 142 of guide housing 50 can be implemented as end-to-end openings 146.

Although not shown in the figures, such latching elements 134 can optionally also be present on connector 6 and in first receptacle 52.

As illustrated in Figures 7 and 8, at least one contact slot 44 of fork-shaped contacts 40 of mating connector 8 can be associated with each blade-shaped contact 26 of connector 6. Furthermore, each blade-shaped contact 26 can be received in associated contact slot 44 in a movable manner relative to associated contact slot 44 in direction 104 along link guide 14 while being in contact with associated contact slot 44. In particular, each blade-shaped contact 26 can be inserted into associated contact slot 44 with the aid of link guide 14 and electrically contacted on both sides. In this process, insertion blade 38 simplifies the insertion of the respective blade-shaped contact 26 into associated contact slot 44, since insertion blade 38 penetrates between tips 46 of contact strips 42 in a wedge-like manner and spreads contact strips 42 apart.

In the state of contact strips 42 being spread apart, contact surfaces 24a of blade-shaped contacts 26 touch contact surfaces 24b of fork-shaped contacts 40. In other words, tips 46 of contact strips 42 rest on contact surfaces 24a and contact them electrically at at least one respective point of contact 45.

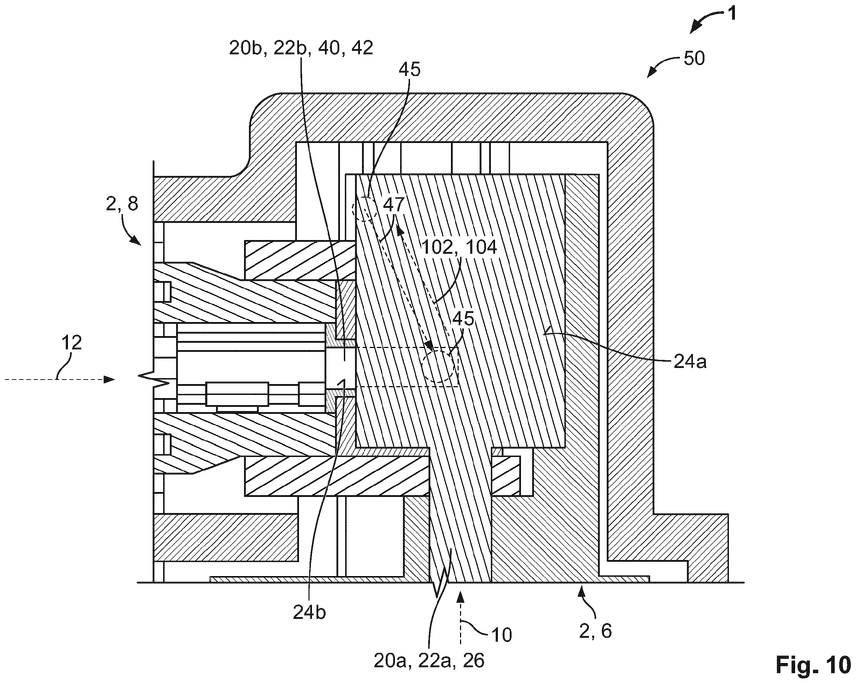

The motion of connector 6 and mating connector 8 coupled by way of link guide 14 creates a relative motion between blade-shaped contacts 26 and associated fork-shaped contacts 40. In the context of the plugging process between connector 6 and mating connector 8, a shift of the respective at least one point of contact 45 on contact surfaces 24a of blade-shaped contacts 26 consequently occurs. Due to course 102 of link track 100, the respective at least one point of contact 45 can shift at least in sections parallel to course 102 of link track 100, i.e., along direction 104. Figure 10 shows a shift of the respective at least one point of contact 45, wherein the course 47 of the shift is shown by a dashed arrow. In the case of a curved link track 100, the course 47 exhibits a corresponding curvature. Alternatively or in addition, the respective at least one point of contact 45 can also be shifted in sections parallel to first plug-in direction 10 and/or second plug-in direction 12.

As shown by way of example in Figure 9, mating connector 8 can therefore be installed in a wiper arm 148 of windshield wiper 4 such that it is inaccessible from the outside and still can be moved with the aid of link guide 14 from pre-assembly position 118b of mating connector 8 to final assembly position 124b of mating connector 8, in that connector 6 is moved from pre-assembly position 118a of connector 6 to final assembly position 124a of connector 6. Connector 6 can be there attached to a wiper blade 150.

Ends 152 of fork-shaped contacts 40 facing away from contact surfaces 24b of fork-shaped contacts 40 can each be crimped onto conductors (not shown) of an electrical cable 154 of wiper arm 148. Ends 152 of blade-shaped contacts 26 facing away from contact surfaces 24a of blade-shaped contacts 26 can in turn be connected to electric heating elements 156 of wiper blade 150 by way of soldering, welding or similar fastening methods.

Overall, wiper blade 150 can be releasably connected to wiper arm 148 by way of angled plug connection 1 according to the invention. If required, at least one further mechanical and/or fluid-delivering connection element 158 can connect wiper blade 150 to wiper arm 148.

To ensure the tightness of angled plug connection 1 against the ingress of water or other liquids, connector housing 16b of mating connector 8 can be surrounded by a sealing ring 162 in a circumferential direction 160 perpendicular to second plug-in direction 12, as shown in Figure 1. Sealing ring 162 can then serve to seal gap 164b between connector housing 16b of mating connector 8 and guide housing 50. Guide housing 50 can alternatively be equipped with such a sealing ring 162. This is shown in Figure 2 for sealing gap 164a between connector housing 16a of connector 6 and guide housing 50.

### REFERENCE NUMERALS

- 1: angled plug connection
- 2: electrical connector
- 4: windshield wiper
- 6: connector
- 8: mating connector
- 10: first plug-in direction
- 12: second plug-in direction
- 14: link guide
- 16a, 16b: connector housing
- 18a, 18b: contact support
- 20a, 20b: contact element
- 22a, 22b: mating contact
- 24a, 24b: contact surface
- 26: blade-shaped contact
- 28: space
- 30: direction
- 32: section
- 34: insertion chamfer
- 36: edge
- 38: insertion blade
- 40: fork-shaped contact
- 42: contact strip
- 44: contact slot
- 45: point of contact
- 46: tip
- 47: course
- 48: gap-shaped opening
- 50: guide housing
- 52: first receptacle
- 54: second receptacle
- 56: cage
- 58: first socket
- 60: second socket
- 62a, 62b: cross section
- 64a, 64b: inner contour
- 66a, 66b: outer contour
- 68a, 68b: cross section
- 70: interior
- 72: linear guide element
- 74: complementary linear guide element
- 76: rail-like convexity
- 78a, 78b: inner surface
- 80: channel-like concavity
- 82a, 82b: outer surface
- 86: inner surface
- 88: bulge
- 90a, 90b: link guide element
- 92: sliding block
- 94: rail-like projection
- 96: acute angle
- 98: connecting link
- 100: link track
- 102: course
- 104: direction
- 106: slot-like recess
- 110: linear groove
- 112: cross section
- 114: inner contour
- 116: outer contour
- 118a, 118b: pre-assembly position
- 120: end
- 122: outer edge
- 124a, 124b: final assembly position
- 126: shoulder
- 128: step
- 130: face surface
- 132: latching connection
- 134: latching element
- 136: complementary latching element
- 138: resilient spring arm
- 140: latching hook
- 142: latching groove
- 146: end-to-end opening
- 148: wiper arm
- 150: wiper blade
- 152: end
- 154: cable
- 156: heating element
- 158: connection element
- 160: circumferential direction
- 162: sealing ring
- 164a, 164b: gap

## Claims

1. Angled plug connection (1) with a connector (6), a mating connector (8) and a guide housing (50) which is formed having a first receptacle (52) for said connector (6) and a second receptacle (54) for said mating connector (8), wherein said first receptacle (52) extends along a first plug-in direction (10) and said second receptacle (54) extends along a second plug-in direction (12) that extends at an angle or perpendicularly to the first plug-in direction (10), wherein said second receptacle (54) opens into said first receptacle (52) and wherein the connector (6) is adapted to be plugged in said first receptacle (52) along the first plug-in direction (10) and the mating connector (8) is adapted to be plugged in the second receptacle (54) along the second plug-in direction (12), wherein said connector (6) is connected to said mating connector (8) by way of a link guide (14), **characterized in that** a motion of said connector (6) along the first plug-in direction (10) is coupled by way of said link guide (14) to a motion of said mating connector (8) in the direction of the second plug-in direction (12).

2. Angled plug connection (1) according to claim 1, wherein said connector (6) comprises at least one link guide element (90a) and said mating connector (8) comprises at least one link guide element (90b) that is complementary to said link guide element (90a) of said connector (6).

3. Angled plug connection (1) according to claim 1 or 2, wherein said connector (6) comprises at least one sliding block (92) and said mating connector (8) comprises at least one connecting link (98) having a link track (100) that is shaped to be complementary to said at least one sliding block (92) of said connector (6).

4. Angled plug connection (1) according to one of the claims 1 to 3, wherein at least one contact slot (44) of said mating connector (8) is associated with at least one blade-shaped contact (26) of said connector (6) and wherein said at least one blade-shaped contact (26) is received in said at least one contact slot (44) in a movable manner relative to said at least one contact slot (44) in a direction (104) along said link guide (14) while in contact with said at least one contact slot (44).

5. Angled plug connection (1) according to one of the claims 1 to 4, wherein at least one link guide element (90a, 90b) of said link guide (14) is disposed on a connector housing (16a, 16b) of one electrical connector (2) for guiding a complementary link guide element (90a, 90b) of the other connector (6, 8) of said angled plug connection (1).

6. Angled plug connection (1) according to claim 5, wherein said connector housing (16a) holds at least one contact element (20a) which is configured as a blade-shaped contact (26) with at least one insertion chamfer (34), and wherein said at least one insertion chamfer (34) extends on an edge (36) of said blade-shaped contact (26) that is parallel to the first plug-in direction (10).

7. Angled plug connection (1) according to claim 5, wherein said connector housing (16b) holds at least one contact element (20b) which is configured as a fork-shaped contact (40) with at least two contact strips (42) defining said contact slot (44) and said contact slot (44) extends parallel to the second plug-in direction (12).

8. Angled plug connection (1) according to claim 6 or 7, wherein said at least one contact element (20a, 20b) extends freely in a space (28) which is surrounded by said connector housing (16a, 16b) and in which said at least one link guide element (90a, 90b) is disposed.

9. Angled plug connection (1) according to one of the claims 5 to 8, wherein one link guide element (90a, 90b) is respectively disposed on at least two oppositely disposed surfaces (82a, 82b, 86) of said connector housing (16a, 16b).

10. Electrically heated windshield wiper (4) comprising a wiper arm (148), a wiper blade (150), and at least one angled plug connection (1) according to one of the claims 1 to 9, wherein said wiper blade (150) is connected to said wiper arm (148) by way of the at least one angled plug connection (1).

## Patentansprüche

1. Abgewinkelte Steckverbindung (1) mit einem Steckverbinder (6), einem komplementären Steckverbinder (8) und einem Führungsgehäuse (50), das mit einer ersten Buchse (52) für den Steckverbinder (6) und einer zweiten Buchse (54) für den komplementären Steckverbinder (8) ausgebildet ist, wobei sich die erste Buchse (52) entlang einer ersten Einsteckrichtung (10) erstreckt und sich die zweite Buchse (54) entlang einer mit einem Winkel oder senkrecht zu der ersten Einsteckrichtung (10) erstreckenden zweiten Einsteckrichtung (12) erstreckt, wobei sich die zweite Buchse (54) in die erste Buchse (52) öffnet und wobei der Steckverbinder (6) ausgebildet ist, um in die erste Buchse (52) entlang der ersten Einsteckrichtung (10) eingesteckt zu werden, und der komplementäre Steckverbinder (8) ausgebildet ist, um in die zweite Buchse (54) entlang der zweiten Einsteckrichtung (12) eingesteckt zu werden, wobei der Steckverbinder (6) mit dem komplementären Steckverbinder (8) mittels einer Verbindungsführung (14) verbunden wird, **dadurch gekennzeichnet, dass** eine Bewegung des Steckverbinders (6) entlang der ersten Einsteckrichtung (10) über die Verbindungsführung (14) mit einer Bewegung des komplementären Steckverbinders (8) in der Richtung der zweiten Einsteckrichtung (12) gekoppelt ist.

2. Abgewinkelte Steckverbindung (1) nach Anspruch 1, wobei der Steckverbinder (6) wenigstens ein Verbindungsführungselement (90a) umfasst und der komplementäre Steckverbinder (8) wenigstens ein Verbindungsführungselement (90b), das komplementär zu dem Verbindungsführungselement (90a) des Steckverbinders (6) ist, umfasst.

3. Abgewinkelte Steckverbindung (1) nach Anspruch 1 oder 2, wobei der Steckverbinder (6) wenigstens einen Gleitblock (92) umfasst und der komplementäre Steckverbinder (8) wenigstens einen Verbindungsteil (98) mit einer Verbindungsschiene (100), die komplementär zu dem wenigstens einen Gleitblock (92) des Steckverbinders (6) geformt ist, umfasst.

4. Abgewinkelte Steckverbindung (1) nach einem der Ansprüche 1 bis 3, wobei der wenigstens eine Kontaktschlitz (44) des komplementären Steckverbinders (8) mit wenigstens einem klingenförmigen Kontakt (26) des Steckverbinders (6) assoziiert ist und wobei der wenigstens eine klingenförmige Kontakt (26) in dem wenigstens einen Kontaktschlitz (44) beweglich relativ zu dem wenigstens einen Kontaktschlitz (44) in einer Richtung (104) entlang der Verbindungsführung (14) aufgenommen wird, während er den wenigstens einen Kontaktschlitz (44) kontaktiert.

5. Abgewinkelte Steckverbindung (1) nach einem der Ansprüche 1 bis 4, wobei wenigstens ein Verbindungsführungselement (90a, 90b) der Verbindungsführung (14) an einem Steckverbindergehäuse (16a, 16b) eines elektrischen Steckverbinders (2) angeordnet ist, um ein komplementäres Verbindungsführungselement (90a, 90b) des anderen Steckverbinders (6, 8) der abgewinkelten Steckverbindung (1) zu führen.

6. Abgewinkelte Steckverbindung (1) nach Anspruch 5, wobei das Steckverbindergehäuse (16a) wenigstens ein Kontaktelement (20a) hält, das als ein klingenförmiger Kontakt (26) mit wenigstens einer Einsteckschräge (34) konfiguriert ist, und wobei sich die wenigstens eine Einsteckschräge (34) entlang eines Rands (36) des klingenförmigen Kontakts (26), der parallel zu der ersten Einsteckrichtung (10) ist, erstreckt.

7. Abgewinkelte Steckverbindung (1) nach Anspruch 5, wobei das Steckverbindergehäuse (16b) wenigstens ein Kontaktelement (20b) hält, das als ein gabelförmiger Kontakt (40) mit wenigstens zwei Kontaktstreifen (42) konfiguriert ist, die den Kontaktschlitz (44) definieren, und wobei sich der Kontaktschlitz (44) parallel zu der zweiten Einsteckrichtung (12) erstreckt.

8. Abgewinkelte Steckverbindung (1) nach Anspruch 6 oder 7, wobei sich das wenigstens eine Kontaktelement (20a, 20b) frei in einem Raum (28) erstreckt, der durch das Steckverbindergehäuse (16a, 16b) umgeben ist und in dem das wenigstens eine Verbindungsführungselement (90a, 90b) angeordnet ist.

9. Abgewinkelte Steckverbindung (1) nach einem der Ansprüche 5 bis 8, wobei ein Verbindungsführungselement (90a, 90b) jeweils an wenigstens zwei gegenüberliegend angeordneten Flächen (82a, 82b, 86) des Steckverbindergehäuses (16a, 16b) angeordnet ist.

10. Elektrisch geheizter Scheibenwischer (4), der einen Wischerarm (148), ein Wischerblatt (150) und wenigstens eine abgewinkelte Steckverbindung (1) gemäß den Ansprüchen 1 bis 9 umfasst, wobei das Wischerblatt (150) mit dem Wischerarm (148) über die wenigstens eine abgewinkelte Steckverbindung (1) verbunden ist.

## Revendications

1. Connexion à fiche coudée (1) avec un connecteur (6), un connecteur d'accouplement (8) et un boîtier de guidage (50) qui est formé avec un premier réceptacle (52) pour ledit connecteur (6) et un second réceptacle (54) pour ledit connecteur d'accouplement (8), dans lequel ledit premier réceptacle (52) s'étend le long d'une première direction d'enfichage (10) et ledit second réceptacle (54) s'étend le long d'une seconde direction d'enfichage (12) qui s'étend à un angle ou perpendiculairement à la première direction d'enfichage (10), dans lequel ledit second réceptacle (54) s'ouvre dans ledit premier réceptacle (52) et dans lequel le connecteur (6) est conçu pour être enfiché dans ledit premier réceptacle (52) le long de la première direction d'enfichage (10) et le connecteur d'accouplement (8) est conçu pour être enfiché dans le second réceptacle (54) le long de la seconde direction d'enfichage (12), dans lequel ledit connecteur (6) est relié audit connecteur d'accouplement (8) au moyen d'un guide de liaison (14), **caractérisé en ce qu'**un mouvement dudit connecteur (6) le long de la première direction d'enfichage (10) est couplé au moyen dudit guide de liaison (14) à un mouvement dudit connecteur d'accouplement (8) dans la direction de la seconde direction d'enfichage (12).

2. Connexion à fiche coudée (1) selon la revendication 1, dans laquelle ledit connecteur (6) comprend au moins un élément de guidage de liaison (90a) et ledit connecteur d'accouplement (8) comprend au moins un élément de guidage de liaison (90b) qui est complémentaire à l'élément de guidage de liaison (90a) dudit connecteur (6).

3. Connexion à fiche coudée (1) selon les revendications 1 ou 2, dans laquelle ledit connecteur (6) comprend au moins un bloc coulissant (92) et ledit connecteur d'accouplement (8) comprend au moins une liaison de connexion (98) ayant une piste de liaison (100) qui est formée pour être complémentaire audit au moins un bloc coulissant (92) dudit connecteur (6).

4. Connexion à fiche coudée (1) selon l'une des revendications 1 à 3, dans laquelle au moins une fente de contact (44) dudit connecteur d'accouplement (8) est associée à au moins un contact en forme de lame (26) dudit connecteur (6) et dans laquelle ledit au moins un contact en forme de lame (26) est reçu dans ladite au moins une fente de contact (44) de manière mobile par rapport à ladite au moins une fente de contact (44) dans une direction (104) le long dudit guide de liaison (14) alors qu'il est en contact avec ladite au moins une fente de contact (44).

5. Connexion à fiche coudée (1) selon l'une des revendications 1 à 4, dans laquelle au moins un élément de guidage de liaison (90a, 90b) dudit guide de liaison (14) est disposé sur un boîtier de connecteur (16a, 16b) d'un connecteur électrique (2) pour guider un élément de guidage de liaison complémentaire (90a, 90b) de l'autre connecteur (6, 8) de ladite connexion à fiche coudée (1).

6. Connexion à fiche coudée (1) selon la revendication 5, dans laquelle ledit boîtier de connecteur (16a) contient au moins un élément de contact (20a) qui est configuré comme un contact en forme de lame (26) avec au moins un chanfrein d'insertion (34), et dans laquelle ledit au moins un chanfrein d'insertion (34) s'étend sur un bord (36) dudit contact en forme de lame (26) qui est parallèle à la première direction d'enfichage (10).

7. Connexion à fiche coudée (1) selon la revendication 5, dans laquelle ledit boîtier de connecteur (16b) contient au moins un élément de contact (20b) qui est configuré comme un contact en forme de fourche (40) avec au moins deux bandes de contact (42) définissant ladite fente de contact (44) et ladite fente de contact (44) s'étend parallèlement à la seconde direction d'enfichage (12).

8. Connexion à fiche coudée (1) selon les revendications 6 ou 7, dans laquelle ledit au moins un élément de contact (20a, 20b) s'étend librement dans un espace (28) qui est entouré par ledit boîtier de connecteur (16a, 16b) et dans lequel ledit au moins un élément de guidage de liaison (90a, 90b) est disposé.

9. Connexion à fiche coudée (1) selon l'une des revendications 5 à 8, dans laquelle un élément de guidage de lien (90a, 90b) est respectivement disposé sur au moins deux surfaces opposées (82a, 82b, 86) dudit boîtier de connecteur (16a, 16b).

10. Essuie-glace chauffé électriquement (4) comprenant un bras d'essuie-glace (148), un balai d'essuie-glace (150), et au moins une connexion à fiche coudée (1) selon l'une des revendications 1 à 9, dans lequel ledit balai d'essuie-glace (150) est connecté audit bras d'essuie-glace (148) par l'intermédiaire de ladite.au moins une connexion à fiche coudée (1).
